# EUROPEAN PATENT APPLICATION

(11) **EP 2 249 049 A1**
(43) Date of publication of application: **10.11.2010**
(21) Application number: 09010028.0
(22) Date of filing: 04.08.2009
(51) Int. Cl.: F16B 47/00, B66C 1/02, B25B 11/00, B60R 11/02, B65G 49/06

(54) **Soft adapter disc for attaching suction foot holder to non-smooh surfaces**

(30) Priority: 04.05.2009 DE 202009006346 U; 27.05.2009 DE 202009007571 U; 24.06.2009 DE 202009008682 U
(71) Applicant: Richter, Harald, 75331 Engelsbrand (DE)
(72) Inventor: Richter, Harald, 75331 Engelsbrand (DE)
(74) Representative: Gallo, Wolfgang

(57) **Abstract**

An adapter disc for use between a suction foot and a not completely smooth support surface is in the form of a flexible soft plastic disc (1) with preferably at least one preferably small cutout (2) and has an upper side to which a carrier layer (12, 12') of a stiff but still flexible plastic foil or a thin stiff plate of plastic or metal may be connected.

## Description

Suction foot holders are widely used for example for apparatus holder of mobile navigation apparatus, mobile telephones and similar devices used in vehicles. The suction foot holders are suitable for attachment to smooth surfaces such as for example the windshield.

Such suction foot holders cannot be attached to surfaces which are not completely smooth such as for example dashboard coverings of grained imitation leather unless also adapter plates are used which are also known and which are screwed or cemented to the dashboard and which are provided with a smooth surface for supporting the suction foot holder. However, very few users are willing to drill holes into the dashboard or another surface for the mounting of an adapter plate and many users also want to avoid the cementing of an adapter plate for fear of causing, upon removal of the adapter plate, permanent discolorations or other damages to the surface of the dashboard by cement material residues.

It is the object of the invention to provide a possibility for the attachment of suction foot holders to surfaces which are not perfectly smooth, or which are somewhat textured, without the need for screwing or cementing an adapter plate to the particular surface.

The object is solved in accordance with the invention by a soft adapter disc which consists of a soft material such as silicon and which is placed loosely between the respective surface and the suction foot holder and which is preferably provided in its center area with at least one cut-out.

This adapter disc is loosely placed on the not perfectly smooth attachment surface and the suction foot holder is then simply placed onto the disc and is operated. The soft and flexible plastic material of which the adapter disc consists makes it possible for the adapter disc to adapt to the unevenness of the surface, for example to the grain of an imitation leather cover and to form an airtight seal. It is herein not important that each unevenness of the attachment surface is closed. The adapter disc, on which the circumferential edge of the suction foot holder is disposed with a relatively wide surface area, cooperates with the attachment surface over a wide surface area whereby a seal is easily and reliably established. When the suction mechanism of the suction foot holder is released and the suction foot is removed, the adapter disc may also be removed again.

As material for the adapter disc silicon, polyurethane or soft vinyl may be used; the preferred material however is silicon.

Upon operating the suction foot mechanism while slightly pressing the suction foot holder onto the adapter disc, the vacuum generated in the suction foot causes the suction foot holder edge area to be biased with relatively high pressure onto the adapter disc whereby the disc is firmly pressed onto the attachment surface so that, as a result of the softness of the adapter disc material, a perfect and securely gas-tight seal is generated. In this way, the suction foot holder can be attached by means of the adapter disc according to the invention with a very high holding force also to surfaces, which are not perfectly smooth.

In its inner area, the adapter disc has preferably at least one cutout, that is, an opening or several openings which may be - and preferably are - small in order to provide for pressure equalization between the top side and the bottom side of the adapter disc, so that the vacuum generated by the suction foot is effective via the openings in the adapter disc also between support surface area and the adapter disc. However, such a perforation of the adapter disc is not absolutely necessary. Without perforations, the adapter disc becomes in its center area a second suction membrane and the suction membrane of the suction foot then generates a vacuum between itself and the adapter disc while, at the same time, pressing the suction foot outer edge areas onto the outer edge area of the adapter disc and the edge area of the adapter disc onto the support surface. This vacuum causes the adapter disc to curve into the suction foot cavity whereby the inwardly curved adapter disc itself acts as a suction membrane generating a vacuum between itself and the support surface. The adapter disc consequently is effective equally well without any cutouts being provided; but the presence of at least one cutout causes the adapter disc to remain essentially flat so that it is not subjected to a radial inner tension force by its center area being curved into the suction foot cavity. This enhances the adaptation of the soft adapter disc material to the support surface.

Because of the softness of an adapter disc which consists of very soft silicon or another soft material, the disc is correspondingly very flexible which may be conceived by a user as detrimentally affecting the handling.

In accordance with a preferred embodiment of the invention, a carrier layer is therefore provided which forms the top side of the adapter disc. This carrier layer may be in the form of a thin, substantially stiffer but still flexible foil of a suitable plastic material to the underside of which the soft material is connected and whose upper side is absolutely smooth so that the suction foot can easily be placed thereon. The carrier layer can in this case be in the form of a sufficiently wide ring with a relatively large central opening.

With the substantially stiffer, but still flexible carrier layer, the adapter disc is much easier to handle and easier to put in place and also to remove. And it still can be used for support surfaces which do not only have a certain roughness that would not permit the direct application of a suction foot but also a certain curvature to which the adapter disc can adapt. It is known that such adaptability is also inherent to the suction foot since its suction membrane is sufficiently soft and elastic.

Alternatively to the embodiment with a flexible foil, the cover layer may also be in the form of a thin stiff plate consisting of plastic or of metal. The upper side thereof then again forms a fully smooth support surface for the suction foot and the material layer connected to the underside of the stiff plate then adapts to the support surface with all of its unevenness.

The soft material layer has a thickness preferably in the range of about 1 mm or slightly more so that not only a good adaptability to rough or grained support surfaces is obtained but also a compensation capability for any other small unevenness or a certain curvature of the support surface also if the carrier layer is rigid.

In each case, preferably a pressure equalization opening is provided in the adapter disc which however is small so that, upon placement of the suction foot onto the adapter disc, as little as possible air space is present under the suction foot whereby, upon moving the suction foot into its operating position that is, upon pulling the suction membrane into the suction foot housing, the highest possible increase of the free volume and, as a result, an as large as possible suction force can be generated.

An embodiment of the invention is schematically shown in the accompanying drawings and will be described shortly below. In the figures, it is shown in:
Fig. 1 a top view of an adapter disc according to the invention,
Fig. 2 in a partially sectional side view, the use of the adapter disc according to Fig. 1 for the attachment of a suction foot to a support surface which is not perfectly smooth,
Fig. 3 a top view of a modified adapter disc with a top side carrier layer in the form of a foil,
Fig. 4 a side view of the modified adapter disc of Fig. 3, and
Fig. 5 a side view of a modified adapter disc similar to Fig. 4, but with a top side carrier layer in the form of a plate.

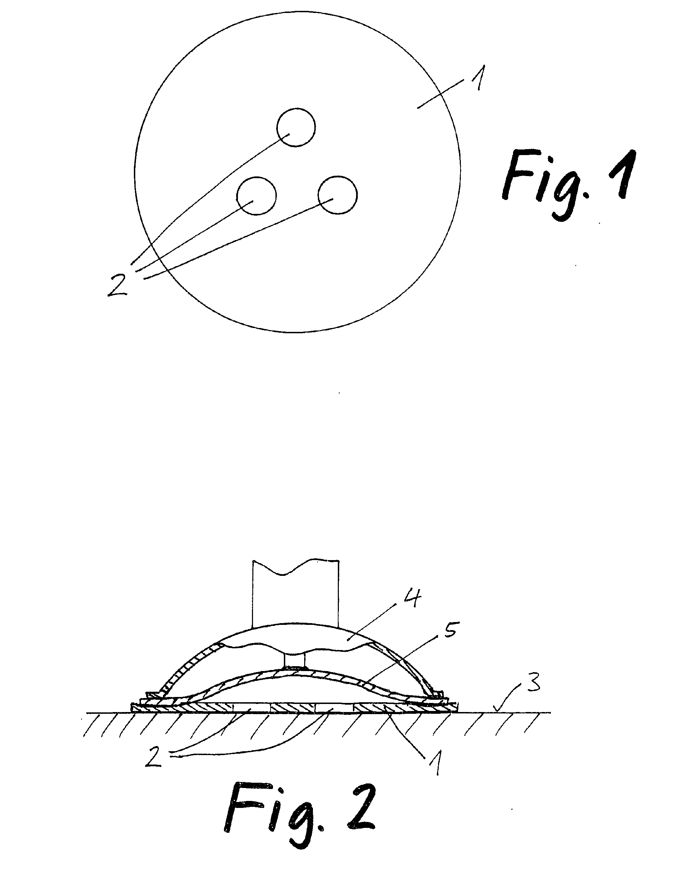

Fig. 1 shows a circular adapter disc 1 according to the invention in a top view. In the center area thereof, it has for example three relatively small cutouts 2 for establishing pressure equalization between the top and the bottom sides of the disc. In practice, the cutouts can be much smaller than they are shown in the drawing for explanatory purposes; they may have for example a diameter in the area of only 1 mm.

The adapter disc 1 consists of a soft rubber-like very soft and adaptable plastic material that is, particularly silicon but it may also consist for example of polyurethane or soft vinyl.

Fig. 2 shows, in a partial sectional side view, the adapter disc 2 disposed on a not completely smooth support surface 3 with a suction foot 4 of a suction foot holder disposed thereon in a evacuation position wherein the suction membrane 5 is curved into the suction foot housing. It is shown that the adapter disc 1 is compressed in the circumferential edge area by the pressure generated by the vacuum which increases the engagement of the soft adapter disc material with the support surface.

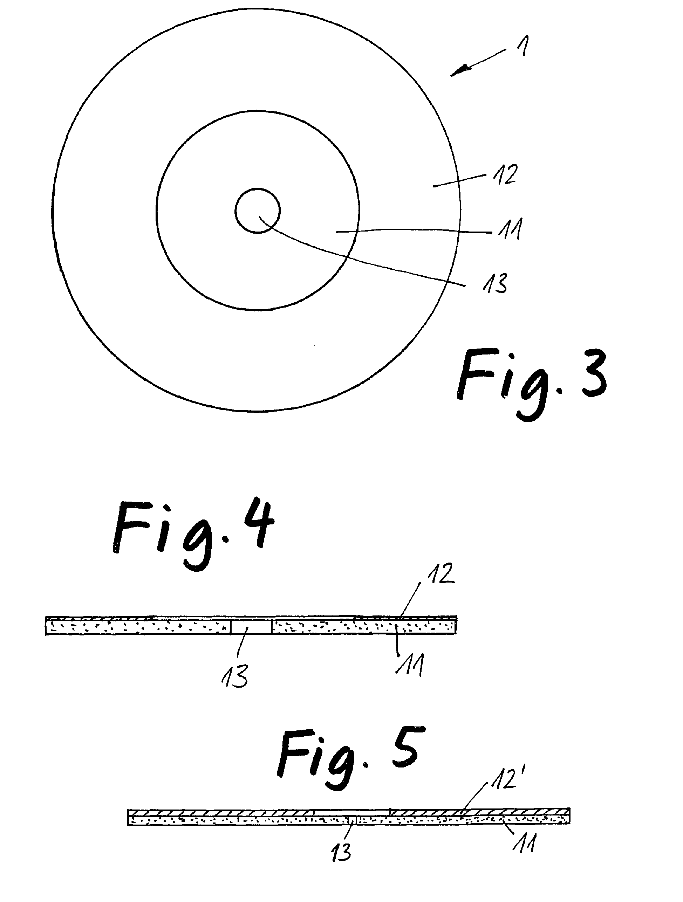

Figs. 3 and 4 are a top view and a sectional side view of a modified adapter disc which comprises a soft material layer 11 (like the adapter disc 1 of Fig. 1 altogether) and an upper carrier layer 12.

The carrier layer 12 consists of a suitable plastic foil which is relatively thin but consists of a much stiffer material than the soft material layer 11 which - as already mentioned - consists particularly of silicon but may also consist for example of polyurethane or soft vinyl. The carrier layer 12 however is still sufficiently flexible so that it can adapt to a certain curvature of the support surface.

The soft material layer 11 is connected to the underside of the carrier layer 12 in a firm and absolutely gastight manner and the carrier layer 12 has a completely smooth surface for the attachment of the suction foot thereto.

The adapter disc shown in Figs. 3 and 4 may basically be in the form of a radially sufficiently wide annular body, that is, it does not need to be an essentially full-area disc, wherein the carrier layer 12 provides, also with respect to the annular form, for a high form stability of the adapter disc. The central opening 13 consequently may be relatively large. However, with regard to the strength of the vacuum to be generated by the suction foot with a given travel length of the suction foot operating mechanism, it would be much more advantageous if a central or other opening 13 in the adapter disc, at least in the soft material layer 11, is very small, since the more space the material of the adapter disc below the suction foot occupies the smaller is the remaining air volume under the suction membrane of the suction foot and, as a result, the stronger is the vacuum generated with a given operating travel length of the suction operating mechanism or, respectively, displacement distance of the suction membrane and, the greater is of course also the retaining force.

However, the only very thin carrier layer 12 may be reduced to a sufficiently wide annular area beyond which the soft layer 11 may extend radially inwardly. This is arbitrarily selectable, wherein the overall flexibility of the adapter disc and its adaptability also to spherical curvatures of the support surface can be adjusted by a selection of the actual size of the extension of the carrier layer.

Fig. 5 shows another possible embodiment of the adapter disc similar to that of Figs. 3 and 4. It differs therefrom in that the carrier layer 12' is not a thin flexible foil but a plate which advantageously consists of a stiff plastic material but may also be formed by a metal sheet. In this case, only little adaptability to curvatures of the support surface is obtained but, on the other hand, the handling of the adapter disc during use is simple and is considered to be advantageous by some users because the stiff plate serving as carrier layer has a rigid base form and is not flexible.

What has been said concerning the extension of the soft material layer 11 and the possible reduction of the carrier layer to a wide outer annular area of the embodiment of Figs. 3 and 4 also applies to the embodiment according to Fig. 5.

## Claims

1. Adapter disc for use between a suction foot and a support surface, which is not completely smooth, in the form of a flexible soft plastic disc (1) of a soft plastic material.

2. Adapter disc according to claim 1, including in its center area at least one cutout (2).

3. Adapter disc according to claim 1 or 2, wherein the at least one cut-out has only a minimal size, for example, in the diameter range of 1 mm.

4. Adapter disc according to one of claims 1 to 3, which consists of silicon.

5. Adapter disc according to one of claims 1 to 3, which consists of polyurethane or soft vinyl material.

6. Adapter disc according to one of claims 1 to 5, which is provided at its top side with a carrier layer (12) whose upper side is in the form of a smooth surface and to whose underside a soft material layer (1) forming the soft plastic disc is connected in a firm and gas-tight manner and which is substantially stiffer than the soft material layer (11).

7. Adapter disc according to claim 6, wherein the carrier layer consists of a stiff but still bendable plastic material.

8. Adapter disc according to claim 6, wherein the carrier plate (12') is in the form of a thin rigid plate of plastic material or metal.

9. Adapter disc according to claim 7 or 8, wherein the carrier layer (12, 12') comprises at least a radially wide annular area in the radially outer part of the adapter disc.

## Amended claims

### Amended claims in accordance with Rule 137(2) EPC.

**1.** Adapter disc for being loosely placed between a suction foot and a support surface, which support surface is not completely smooth, said adapter disc consisting of a flexible soft plastic disc (1) of a very soft plastic material allowing the adapter disc to adapt to the uneveness of the support surface.

**2.** Adapter disc according to claim 1, including in its center area at least one cutout (2).

**3.** Adapter disc according to claim 1 or 2, wherein the at least one cut-out has only a minimal size, for example, in the diameter range of 1 mm.

**4.** Adapter disc according to one of claims 1 to 3, which consists of silicon.

**5.** Adapter disc according to one of claims 1 to 3, which consists of polyurethane or soft vinyl material.

**6.** Adapter disc according to one of claims 1 to 5, which is provided at its top side with a carrier layer (12) whose upper side is in the form of a smooth surface and to whose underside a soft material layer (1) forming the soft plastic disc is connected in a firm and gas-tight manner and which is substantially stiffer than the soft material layer (11).

**7.** Adapter disc according to claim 6, wherein the carrier layer consists of a stiff but still bendable plastic material.

**8.** Adapter disc according to claim 6, wherein the carrier plate (12') is in the form of a thin rigid plate of plastic material or metal.

**9.** Adapter disc according to claim 7 or 8, wherein the carrier layer (12, 12') comprises at least a radially wide annular area in the radially outer part of the adapter disc.
